(19) Europäisches Patentamt
European Patent Office
Office européen des brevets

(11) Veröffentlichungsnummer: **0 043 926**
**A1**

# (12) EUROPÄISCHE PATENTANMELDUNG

(21) Anmeldenummer: 81104598.8

(22) Anmeldetag: 15.06.81

(51) Int. Cl.³: C 07 F 9/165
C 07 F 9/24, C 07 F 9/173
A 01 N 57/10, A 01 N 57/26

(30) Priorität: 10.07.80 DE 3026120

(43) Veröffentlichungstag der Anmeldung: 20.01.82 Patentblatt 82/3

(84) Benannte Vertragsstaaten: BE CH DE FR IT LI NL

(71) Anmelder: BASF Aktiengesellschaft
Carl-Bosch-Strasse 38
D-6700 Ludwigshafen(DE)

(72) Erfinder: Buerstinghaus, Rainer, Dr.
Weinbergstrasse 85
D-6940 Weinheim(DE)

(72) Erfinder: Kiehs, Karl, Dr.
Sudetenstrasse 22
D-6840 Lampertheim(DE)

(72) Erfinder: Adolphi, Heinrich, Dr.
Kalmitweg 11
D-6703 Limburgerhof(DE)

(72) Erfinder: Pommer, Ernst-Heinrich, Dr.
Berliner Platz 7
D-6703 Limburgerhof(DE)

(54) **2-Thiocyanoethyl-phosphorsäurederivate, Verfahren zu ihrer Herstellung und ihre Verwendung zur Bekämpfung von Schädlingen und Schadpilzen.**

(57) Die vorliegende Erfindung betrifft 2-Thiocyanoethyl-phosphorsäurederivate der Formel

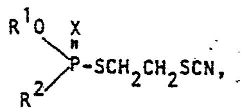

in der $R^1$, $R^2$ und X die in der Beschreibung genannten Bedeutungen haben, ein Verfahren zu ihrer Herstellung und ihre Verwendung zur Bekämpfung von Schädlingen und Schadpilzen.

EP 0 043 926 A1

# 2-Thiocyanoethyl-phosphorsäurederivate, Verfahren zu ihrer Herstellung und ihre Verwendung zur Bekämpfung von Schädlingen und Schadpilzen

Die Erfindung betrifft 2-Thiocyanoethyl-phosphorsäurederivate, Verfahren zu ihrer Herstellung und Mittel zur Bekämpfung von Schädlingen und Schadpilzen, die diese Phosphorsäurederivate als Wirkstoffe enthalten, sowie ein Verfahren zur Bekämpfung von Schädlingen und Schadpilzen mit den 2-Thiocyanoethyl-phosphorsäurederivaten als Wirkstoff.

Es ist bekannt, daß bestimmte Dithiophosphorsäure-O,O,S-triester oder Dithiophosphorsäure-O,S,S-triester, z.B. O-Ethyl-S,S-di-n-propyl-phosphordithioat oder O,O-Diethyl-S-propargyl-phosphordithioat insektizide, akarizide und nematizide Eigenschaften haben (GB-PS 860 944, US-PS 3 268 393). Ferner ist bekannt, daß sich bestimmte Thiophosphorsäure-O,O,S-triester, z.B. Thiolphosphorsäure-O,O-diethyl-S-benzylester zur Bekämpfung phytophatogener Pilze, insbesondere P'ricularia oryzae eignen (Chem. Abstr. 73, 76037v (1970)).

Es wurde gefunden, daß 2-Thiocyanoethyl-phosphorsäurederivate der Formel I

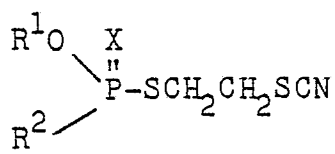

(I),

in der

$R^1$ eine unverzweigte oder verzweigte Alkylgruppe mit bis zu 5 Kohlenstoffatomen,

$R^2$ einen unverzweigten oder verzweigten Alkoxy-, Alkylthio- oder Alkenylthiorest mit jeweils bis zu 5 Kohlenstoffatomen, den Benzylthiorest oder eine unverzweigte oder verzweigte Alkylamino- oder Dialkylaminogruppe mit jeweils bis zu 4 Kohlenstoffatomen in einer Alkylgruppe und

X Sauerstoff oder Schwefel bedeuten, insektizid, akarizid, nematizid und fungizid sehr gut wirksam und bekannten Wirkstoffen ähnlicher Struktur bzw. gleicher Wirkungsrichtung überlegen sind.

Unverzweigte oder verzweigte Alkylreste für $R^1$ sind beispielsweise Methyl, Ethyl, die Propyl-, Butyl- und Pentylreste.

Unverzweigte oder verzweigte Alkoxyreste für $R^2$ sind beispielsweise Methoxy, Ethoxy, Propoxy, Isopropoxy, Butoxy oder Pentoxy; Alkylthiosubstituenten können beispielsweise Methylthio, Ethylthio, Propylthio, Isopropylthio, n-Butylthio oder Isobutylthio sein; als Alkylamino- oder Dialkylaminoreste kommen beispielsweise Methyl- und Dimethylamino, Ethyl- und Diethylamino, Methylethylamino, Isopropylamino, Di-n-propylamino, n-Butylamino, Di-n-butylamino in Betracht.

Bevorzugte Substituenten für $R^1$ sind Methyl und Ethyl; bevorzugte Substituenten für $R^2$ sind Methoxy, Ethoxy, Methylthio, Propylthio, Isopropylthio, Isobutylthio, sec.-Butylthio.

Die 2-Thiocyanoethyl-phosphorsäurederivate der Formel I können durch Umsetzung von 2-Thiocyanoethylhalogeniden der Formel II mit Salzen von Phosphorsäureestern der Formel III nach folgender Reaktionsgleichung erhalten werden:

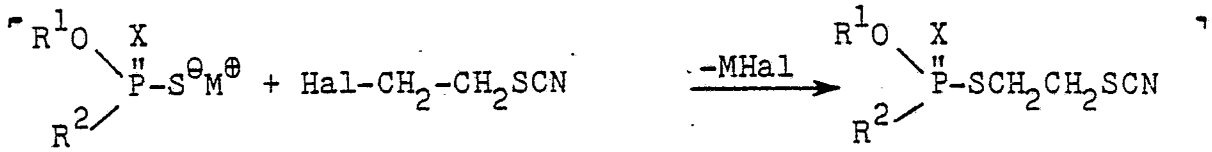


(III) (II) (I)

Dabei haben die Substituenten $R^1$, $R^2$ und X die obenangegebenen Bedeutungen, Hal steht für Halogen und $M^{\oplus}$ für ein Alkalimetallion, ein Äquivalent Erdalkalimetallion oder für ein gegebenenfalls durch Alkylreste substituiertes Ammoniumion.

Als Halogen kommen Fluor, Chlor, Brom, Iod in Betracht, bevorzugt ist Brom. Als Alkaliionen sind Natrium und Kalium, als Ammoniumionen das unsubstituierte Ion, Methyl-, Ethyl-, Propyl-, Isopropyl-, Dimethyl-, Diethyl-, Trimethyl-, Triethyl-, Tetramethyl- oder Tetraethylammonium bevorzugt.

Die Umsetzung wird zweckmäßigerweise in gegenüber den Reaktionsteilnehmern inerten Lösungs- oder Verdünnungsmitteln ausgeführt. Hierfür sind beispielsweise geeignet: Wasser; Alkohole, wie Methanol, Ethanol, Propanol, Butanol; Ether, wie Diethylether, Di-n-butylether, Methyl-tert.-butylether, Tetrahydrofuran, Dioxan, Diglykoldimethylether; Ketone, wie Aceton, Methylethylketon, Diethylketon, Methylisopropylketon; Nitrile, wie Acetonitril, Propionnitril; ferner aliphatische und aromatische, gegebenenfalls chlorierte Kohlenwasserstoffe, wie Petrolether, Benzol, Toluol, Xylol, Benzin, Dichlormethan, Chloroform, Tetrachlorkohlenstoff, Chlorbenzol; Dimethylsulfoxid, Dimethylformamid. Auch Gemische dieser Lösungs- oder Verdünnungsmittel können verwendet werden.

Zur Erhöhung der Reaktivität kann der Zusatz katalytischer Mengen eines Phasentransferkatalysators, z.B. von Benzyltriethylammoniumchlorid (TEBA), von Vorteil sein. Ferner kann ein Zusatz katalytischer Mengen Natriumiodid die Reaktion beschleunigen.

Zur Durchführung des Verfahrens setzt man die Ausgangsstoffe meist in äquimolarem Verhältnis ein. Ein Überschuß der einen oder anderen Reaktionskomponente kann in einigen Fällen zweckmäßig sein.

Die Reaktionstemperatur kann innerhalb eines größeren Bereiches variiert werden. Im allgemeinen arbeitet man zwischen 0 und 120°C, vorzugsweise im Bereich zwischen 20 und 90°C.

Die als Ausgangsmaterial verwendeten 2-Thiocyanoethylhalogenide der Formel II sind literaturbekannt und können durch Umsetzung des entsprechenden 1,2-Dihalogenethans mit Kaliumthiocyanat hergestellt werden (Acta. Chem. Scan. 26, 19 (1972); Synthesis 1978, 577).

Die phosphorsauren Salze der Formel III können nach den in Houben-Weyl, Methoden der Organ. Chemie, Band 12/2, S. 131 ff., Georg Thieme-Verlag, Stuttgart, 1964 oder in der DE-OS 25 06 618 beschriebenen Verfahren hergestellt werden.

Die folgenden Beispiele erläutern die Herstellung der 2-Thiocyanoethylphosphorsäurederivate der Formel I.

Beispiel 1

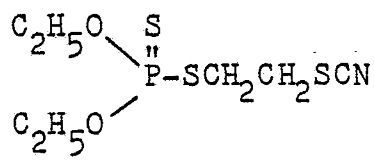

Zu einer Lösung von 16,6 g 2-Thiocyano-1-bromethan in 100 ml absolutem Aceton fügt man 0,2 g fein gepulvertes Natriumiodid hinzu und erwärmt die erhaltene Mischung auf 50°C. Bei dieser Temperatur wird unter Rühren eine Lösung von 20,3 g Ammonium-O,O-diethyldithiophosphat in 100 ml Aceton binnen 30 Minuten hinzugetropft. Anschließend wird der Reaktionsansatz 8 Stunden bei 55°C gerührt, danach auf Raumtemperatur abgekühlt und das kristallin abgeschiedene Ammoniumbromid durch Filtration entfernt. Das Filtrat wird am Rotationsverdampfer vom Aceton befreit, der Rückstand in ungefähr 150 ml Methylenchlorid auugenommen und die erhaltene Lösung dreimal mit Wasser gewaschen. Nach dem Trocknen über Natriumsulfat wird das Lösungsmittel - zuletzt unter vermindertem Druck - vollständig entfernt, wobei 20,1 g O,O-Diethyl-S-(2-thiocyanoethyl)-phosphordithioat in Form eines fast farblosen Öles verbleiben; Ausbeute 74 % der Theorie.

$C_7H_{14}NO_2PS_3$ (271)

Ber.: C 31,0 H 5,2 N 5,2 S 35,5
Gef.: C 31,0 H 5,2 N 5,4 S 35,8

220-MHz-NMR-Spektrum in $CDCl_3$ ($\delta$-Werte):
1,35 (6H), 3,05-3,4 (4H), 4,0-4,3 (4H).

Beispiel 2

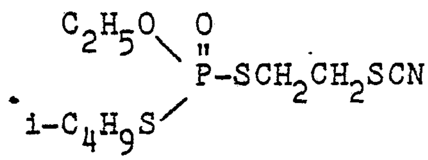

23,3 g Dimethylammonium-O-ethyl-S-(2-methylpropyl)-dithiophosphat werden mit 12,45 g 2-Thiocyano-1-bromethan und 0,5 g TEBA in einer Mischung aus 50 ml Wasser und 50 ml Dimethylformamid 24 Stunden bei 60°C intensiv gerührt. Nach dem Abkühlen wird der Reaktionsansatz in die fünffache Volumenmenge Wasser gegossen und die abgeschiedenen öligen Bestandteile in Ether aufgenommen. Die wäßrige Phase wird zweimal mit Ether extrahiert, die vereinigten organischen Phasen gründlich mit Wasser gewaschen und über Natriumsulfat getrocknet. Nach Abziehen des Lösungsmittel - zuletzt bei 40°C und 0,01 mbar - erhält man 17,0 g O-Ethyl-S-(2-methylpropyl)-S-(2-thiocyanoethyl)-phosphordithioat als gelbliches, viskoses Öl; Ausbeute 76 % der Theorie.

$C_9H_{18}NO_2PS_3$ (299)
Ber.: C 36,1 H 6,1 $n_D^{19}$: 1,5367
Gef.: C 36,2 H 6,3

220-MHz-H-NMR-Spektrum in $CDCl_3$ ($\delta$-Werte):
1,35 (3H), 1,8-2,05 (1H), 2,7-2,9 (2H), 3,15-3,45 (4H), 4,1-4,3 (2H).

Beispiel 3

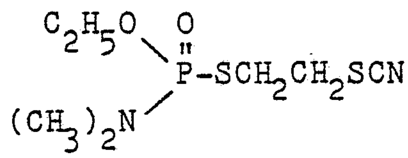

Bei 50°C wird eine Mischung aus 12,45 g 2-Thiocyano-1-bromethan, 24,1 g Dimethylammonium-O-ethyl-N,N-dimethyl-amidothiophosphat, 0,5 g TEBA, 50 ml Wasser und 50 ml Dimethylformamid 16 Stunden lang intensiv gerührt. Anschließend wird der auf Raumtemperatur abgekühlte Reaktionsansatz in 300 ml Wasser gegossen, mit 200 ml Pentan versetzt und gut durchgeschüttelt. Nach kurzem Stehen bilden sich drei Phasen, von denen die untere ein Volumen von ungefähr 15 ml einnimmt. Diese wird in ungefähr 100 ml Ether gelöst, dreimal mit Wasser gewaschen und über Natriumsulfat getrocknet. Das Lösungsmittel wird darauf zunächst am Rotationsverdampfer, später bei 50°C und 0,01 mbar restlos entfernt; es verbleiben 8,52 g O-Ethyl-N,N-dimethyl-S-(2--thiocyanoethyl)-phosphoramidothioat als gelbliches Öl; Ausbeute 45 % der Theorie.

$C_7H_{15}N_2O_2PS_2$ (254)
Ber.: C 33,0 H 5,9 $n_D^{19}$: 1,5396
Gef.: C 32,6 H 5,9

220-MHz-H-NMR-Spektrum in $CDCl_3$ ($\delta$-Werte):
1,2 (3H), 2,65 (3H), 2,7 (3H), 3,0-3,5 (4H), 3,95-4,2 (2H).

Die folgenden Verbindungen der Formel I können beispielsweise analog hergestellt werden:

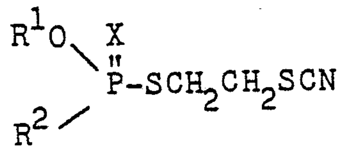

(I)

| Nr. | $R^1$ | $R^2$ | X | H-NMR-Daten (MHz, Lösungsmittel, δ-Werte) |
|---|---|---|---|---|
| 4 | $CH_3$ | $OCH_3$ | S | (60, $CDCl_3$) 2,95-3,55 (4H), 3,70 (6H) |
| 5 | $C_2H_5$ | S-n-$C_3H_7$ | O | (220, $CDCl_3$) 1,0 (3H), 1,35 (3H), 1,75 (2H), 2,7-3,05 (2H), 3,05-3,55 (4H), 4,05-4,30 (2H), |
| 6 | $C_2H_5$ | S-sec.-$C_4H_9$ | O | (220, $CDCl_3$), 1,0 (3H), 1,2-1,55 (6H), 1,6-1,85 (2H), 2,7-3,0 (1H), 3,1-3,45 (4H), 4,0-4,3 (2H) |
| 7 | $C_2H_5$ | S-i-$C_3H_7$ | O | (270, $CDCl_3$) 1,45 (3H), 1,50 (6H), 3,2-3,5 (4H), 3,5-3,7 (1H), 4,2-4,4 (2H) |
| 8 | $C_2H_5$ | $SCH_3$ | O | (220, $CDCl_3$) 1,40 (3H), 2,35 (3H), 3,15-3,6 (4H), 4,1-4,4 (2H) |
| 9 | $C_2H_5$ | $SCH_2C_6H_5$ | O | (60, $CDCl_3$) 1,3 (3H), 2,9-3,5 (4H), 3,95-4,5 (2H), 4,2 (2H), 7,55 (5H) |
| 10 | $C_2H_5$ | $SCH_2CH=CH_2$ | O | (60, $CDCl_3$) 1,4 (3H), 3,0-3,9 (6H), 4,05-4,7 (2H), 5,2-5,7 (2H), 5,7-6,5 (1H) |

Die 2-Thiocyanoethyl-phosphorsäurederivate eignen sich vorwiegend als Wirkstoffe zur Bekämpfung von Insekten, Akariden und Nematoden sowie als Wirkstoffe gegen phytopathogene Pilze, insbesondere zur Bekämpfung von Pflanzenkrankheiten, die durch Piricularia verursacht werden. Besonders hervorzuheben ist die gute Wirksamkeit gegen Piricularia oryzae an Reis.

Zur Bekämpfung von tierischen Pflanzenschädlingen werden die neuen Wirkstoffe vorwiegend mit Kontaktwirkung angewendet, indem man die befallenen Pflanzen behandelt oder die Wirkstoffe oder die Mittel im Lebensraum der Schädlinge ausbringt. Die insektiziden Mittel dieser Erfindung enthalten im allgemeinen zwischen 0,1 und 95 Gewichtsprozent Wirkstoff, vorzugsweise 0,5 bis 90 Gewichtsprozent.

Die Wirkstoffkonzentrationen in den anwendungsfertigen Zubereitungen können in größeren Bereichen variiert werden.

Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Die Aufwandmenge an Wirkstoff beträgt unter Freilandbedingungen 0,2 bis 10, vorzugsweise 0,5 bis 2,0 kg/ha.

Die fungiziden Mittel dieser Erfindung, die kurativ und bemerkenswerterweise auch präventiv angewendet werden können, enthalten im allgemeinen 0,1 bis 95 Gewichtsprozent Wirkstoff, vorzugsweise 0,5 bis 70 Gewichtsprozent. Die

Aufwandmengen liegen je nach Art der gewünschten Wirkung und Stärke des Pilzbefalls zwischen 0,05 und 5 kg Wirkstoff/ha.

Die kurativen Eigenschaften erlauben mit einem sicheren Bekämpfungserfolg die Anwendung der Mittel noch nach erfolgter Infektion der Pflanzen durch die Krankheitserreger. Darüber hinaus sind die neuen Verbindungen systemisch wirksam, so daß über die Wurzelbehandlung auch ein Schutz oberirdischer Pflanzenteile möglich ist.

Die Verbindungen werden angewendet, indem man die Pflanzen mit den Wirkstoffen besprüht oder bestäubt oder die Samen der Pflanzen mit den Wirkstoffen behandelt. Die Anwendung kann vor oder nach der Infektion der Pflanzen oder Samen durch die Pilze erfolgen.

Für die Anwendungsformen zur Bekämpfung von tierischen Schädlingen und von Pilzen kommen im Prinzip die gleichen Formulierungsmethoden und -hilfsmittel in Betracht. Unabhängig von der Anwendungsform bieten die neuen Wirkstoffe den Vorteil, daß man mit ihnen gleichzeitig tierische Schädlinge und Pilzbefall bekämpfen kann.

Die neuen Wirkstoffe werden beispielsweise in Form von direkt versprühbaren Lösungen, Pulvern, Suspensionen, auch hochprozentige wäßrige, ölige oder sonstige Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet. Die Anwendungsformen richten sich ganz nach den Verwendungszwecken; sie sollten in jedem Fall möglichst die feinste Verteilung der neuen Wirkstoffe gewährleisten.

Zur Herstellung von direkt versprühbaren Lösungen, Emulsionen, Pasten und Öldispersionen kommen Mineralölfraktionen von mittlerem bis hohem Siedepunkt, wie Kerosin oder Dieselöl, ferner Kohlenteeröle usw., sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate z.B. Methanol, Ethanol, Propanol, Butanol, Chloroform, Tetrachlorkohlenstoff, Cyclohexanol, Cyclohexanon, Chlorbenzol, Isophoron usw., stark polare Lösungsmittel, wie z.B. Dimethylformamid, Dimethylsulfoxid, N-Methylpyrrolidon, Wasser usw. in Betracht.

Wäßrige Anwendungsformen können aus Emulsionskonzentraten, Pasten oder netzbaren Pulvern (Spritzpulvern), Öldispersionen durch Zusatz von Wasser bereitet werden, Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte

des Naphthalins bzw. der Naphthalinsulfonsäuren mit Phenol und Formaldehyd, Polyoxyethylen-octylphenolether, ethoxyliertes Isooctylphenol, Octylphenol, Nonylphenol, Alkylphenolpolyglykolether, Tributylphenylpolyglykolether, Alkalarylpolyetheralkohole, Isotridecylalkohol, Fettalkoholethylenoxid-Kondensate, ethoxyliertes Rizinusöl, Poloxyethylenalkylether, ethoxyliertes Polyoxypropylen, Laurylalkoholpolyglykoletheracetal, Sorbitester, Lignin, Sulfitablaugen und Methylcellulose in Betracht.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden wie Silicagel, Kieselsäuren, Kieselgele, Silikate, Talkum, Kaolin, Attaclay, Kalkstein, Kreide, Talkum, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nußschalenmehl, Cellulosepulver und andere feste Trägerstoffe.

Beispiele für solche Zubereitungen sind:

I. Man vermischt 90 Gewichtsteile der Verbindung des Beispiels 1 mit 10 Gewichtsteilen N-Methyl-α-pyrrolidon und erhält eine Lösung, die zur Anwendung in Form kleinster Tropfen geeignet ist.

II. 20 Gewichtsteile der Verbindung des Beispiels 2 werden in einer Mischung gelöst, die aus 80 Gewichtsteilen

Xylol, 10 Gewichtsteilen des Anlagerungsproduktes von 8 bis 10 Mol Ethylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

III. 20 Gewichtsteile der Verbindung des Beispiels 3 werden in einer Mischung gelöst, die aus 40 Gewichtsteilen Cyclohexanon, 30 Gewichtsteilen Isobutanol, 20 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

IV. 20 Gewichtsteile der Verbindung des Beispiels 5 werden in einer Mischung gelöst, die aus 25 Gewichtsteilen Cyclohexanol, 65 Gewichtsteilen einer Mineralölfraktion vom Siedepunkt 210 bis 280°C und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gew.% des Wirkstoffs enthält.

V. 20 Gewichtsteile der Verbindung des Beispiels 6 werden mit 3 Gewichtsteilen des Natriumsalzes der Diisobutylnaphthalin- -sulfonsäure, 17 Gewichtsteilen des Natriumsalzes einer Ligninsulfonsäure aus einer Sulfitablauge und 60 Gewichtsteilen pulverförmigem Kieselsäuregel gut vermischt und in einer Hammermühle vermahlen. Durch feines Verteilen der Mischung in 20 000 Gewichtsteilen Wasser erhält man eine Spritzbrühe, die 0,1 Gew.% des Wirkstoffs enthält.

VI. 3 Gewichtsteile der Verbindung des Beispiels 1 werden mit 97 Gewichtsteilen feinteiligem Kaolin innig vermischt. Man erhält auf diese Weise ein Stäubemittel, das 3 Gew.% des Wirkstoffs enthält.

VII. 30 Gewichtsteile der Verbindung des Beispiels 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gewichtsteile der Verbindung des Beispiels 3 werden mit 10 Teilen Natriumsalz eines Phenolsulfonsäure-harnstoff-formaldehyd-Kondensates, 2 Teilen Kieselgel und 48 Teilen Wasser innig vermischt. Man erhält eine stabile wäßrige Dispersion. Durch Verdünnen mit 100 000 Gewichtsteilen Wasser erhält man eine wäßrige Dispersion, die 0,04 Gew.% Wirkstoff enthält.

IX. 20 Teile der Verbindung des Beispiels 10 werden mit 2 Teilen Calciumsalz der Dodecylbenzolsulfonsäure, 8 Teilen Fettalkohol-polyglykolether, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

Die erfindungsgemäßen Mittel können in diesen Anwendungsformen auch zusammen mit anderen Wirkstoffen vorliegen,

wie z.B. Herbiziden, anderen Insektiziden, Wachstumsregulatoren und anderen Fungiziden, oder auch mit Düngemitteln vermischt und ausgebracht werden. Bei einer Anzahl dieser Wirkstoffmischungen treten auch synergistische Effekte auf, d.h. die Wirksamkeit des Kombinationsproduktes ist größer als die der addierten Wirksamkeiten der Einzelkomponenten.

Eine besonders günstige Vergrößerung des Wirkungsspektrums wird mit folgenden Fungiziden erzielt:

Manganethylenbisdithiocarbamat, Mangan-Zinkethylenbisdithiocarbamat, Ammoniak-Komplex von Zink-(N,N-ethylen-bis--dithiocarbamat), N-Trichlormethylthio-tetrahydrophthalimid, N-Trichlormethyl-phthalimid, 5-Ethoxy-3-trichlormethyl-1,2,3-thiadiazol, 2-Methoxycarbonylamino-benzimidazol, 2-Rhodanmethylthiobenzthiazol, 1,4-Dichlor-2,5-dimethoxybenzol, 2,3-Dichlor-6-methyl-1,4-oxathiin-5-carbonsäureanilid, 2-Methyl-5,6-dihydro-4-H-pyran-3-carbonsäure-anilid, 2,4,5-Trimethyl-furan-3-carbonsäureanilid, 2-Methyl-furan-3-carbonsäureanilid, 2,5-Dimethyl-furan-3-carbonsäurecyclohexylamid, N-Cyclohexyl-N-methoxy-2,5-dimethyl-furan-3-carbonsäureamid, 5-Methyl-5-vinyl-3-(3,5--dichlorphenyl)-2,4-dioxo-1,3-oxazolidin, 3-(3,5-Dichlorphenyl)-5-methyl-5-methoxymethyl-1,3-oxazolidin-2,4-dion.

Die folgende Liste von Fungiziden, mit denen die erfindungsgemäßen Verbindungen kombiniert werden können, soll die Kombinationsmöglichkeiten erläutern, nicht aber einschränken.

Fungizide, die mit den erfindungsgemäßen Verbindungen kombiniert werden können, sind beispielsweise:

Schwefel, Dithiocarbamate und deren Derivate, wie Ferridimethyldithiocarbamat, Zinkdimethyldithiocarbamat, oder Zinkethylenbisdithiocarbamat, Tetramethylthiuramidsulfide, Zink-(N,N'-propylen-bis-dithiocarbamat), Ammoniak-Komplex von Zink-(N,N'-propylen-bis-dithiocarbamat) und N,N'-Propylen-bis(thiocarbamoyl)-disulfid;

Nitroderivate, wie
Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat;

heterocyclische Substanzen, wie
2-Heptadecyl-2-imidazolin-acetat,
2,4-Dichlor-6-(o-chloranilino)-s-triazin,
O,O-Diethyl-phthalimidophosphonothioat,
5-Amino-1-(bis-(dimethylamino)-phosphinyl)-3-phenyl-1,2,4--triazol, 2,3-Dicyano-1,4-dithioanthrachinon,
2-Thio-1,3-dithio-(4,5-b)-chinoxalin,
1-(Butylcarbamoyl)-2-benzimidazol-carbaminsäuremethylester,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin-4,4--dioxid, 2,3-Dihydro-5-carboxanilido-6-methyl-1,4-oxathiin-2- -(furyl(2))-benzimidazol,
2-(Furyl-(2))-benzimidazol,
Piperazin-1,4-diyl-bis-(1-(2,2,2-trichlor-ethyl)-formamid),
2-(Thiazolyl-(4))-benzimidazol,
5-Butyl-2-dimethylamino-4-hydroxy-6-methyl-pyrimidin,
Bis-(p-chlorphenyl)-pyridinmethanol,
1,2-Bis-(3-ethoxycarbonyl-2-thioureido)-benzol,
1,2-Bis-(3-methoxycarbonyl-2-thioureido)-benzol.

und weitere Substanzen, wie Dodecylguanidinacetat, 3-(3--(3,5-Dimethyl-2-oxycyclohexyl)-2-hydroxyethyl)- -glutarimid,
Hexachlorbenzol,
N-Dichlorfluormethylthio-N',N'-dimethyl-N-phenyl-schwefelsäurediamid 2,5-Dimethyl-furan-3-carbonsäureanilid,
2-Methyl-benzoesäure-anilid,
2-Iod-benzoesäure-anilid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
1-(4-Chlorphenoxy)-3,3-dimethyl-1-(1H-1,2,4-triazol-1-yl)--2-butanon, 1-(4-Chlorphenoxy)-3,3-dimethyl-1-(1H-1,2,4-triazol-1-yl)-2-butanol, α-(2-Chlorphenyl)-α-(4-chlorphenyl)-5-pyrimidin-methanol.

Insektizide, die mit den erfindungsgemäßen Verbindungen kombiniert werden können, sind beispielsweise 1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl--N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethyl--benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N--[(methylcarbamoyl)-oxy]-thio-acetimidat, Methyl-N',N'-dimethyl-N-[(methylcarbamoyl)oxy]-1-thiooxamidat, N-(2--Methyl-chlor-phenyl)-N',N'-dimethylformamidin, Tetrachlorthiophen, 1-(2,6-Difluor-benzoyl)-3-(4-chlor-phenyl)-harnstoff, 0,0-Dimethyl-O-(p-nitrophenyl)-phosphorthioat, 0,0-Diethyl-O-(p-nitrophenyl)-phosphorthioat, O-Ethyl-O-(p-nitrophenyl)-phenyl-phosphonothioat, 0,0-Dimethyl-O-(3-methyl-4-nitrophenyl)-phosphorthioat, 0,0-Diethyl-O-(2,4-dichlorphenyl)-phosphorthioat, O-Ethyl-O-(2,4-dichlorphenyl)-phenyl-phosphonothioat, 0,0-Dimethyl-O-(2,4,5-trichlorphenyl)-phosphorthioat, O-Ethyl-O-(2,4,5-trichlorphenyl)-ethyl-phosphonothioat, 0,0-Dimethyl-O-(4-brom-2,5-dichlorphenyl)-phosphorthioat, 0,0-Dimethyl-O-(2,5-dichlor-4-jodphenyl)-phosphorthioat, 0,0-Dimethyl-O-(3-methyl-4-methylthiophenyl)-phosphorthioat, O-Ethyl-O-(3-methyl-4-methylthiophenyl)-isopropyl-phosphoramidat, 0,0-Diethyl-O-[p-methylsulfinyl-phenyl]-phosphorthioat, O-Ethyl-S-phenyl-ethyl-phosphonodithioat, 0,0-Diethyl-[2-chlor-1-(2,4-dichlorphenyl)-vinyl]-phosphat, 0,0-Dimethyl-[-2-chlor-1-(2,4,5-trichlorphenyl)]-vinyl-phosphat, 0,0-Dimethyl-S-(1'-phenyl)-ethylacetat-phosphordithioat, Bis-(dimethylamino)-fluorphosphinoxid, Octamethyl-pyrophosphoramid, 0,0,0,0-Tetraethyldithio-pyrophosphat, S-Chlormethyl-0,0-diethyl-phosphordithioat, O-Ethyl-S,S-dipropyl-phosphordithioat, 0,0-Dimethyl-O-2,2-dichlorvinyl-phosphat, 0,0-Dimethyl-1,2-dibrom-2,2-dichlorethylphosphat, 0,0-Dimethyl-2,2,2-trichlor-1-hydroxy-ethylphosphonat, 0,0-Dimethyl-S-[1,2-biscarbethoxy-ethyl-(1)]-phosphordithioat, 0,0-Dimethyl-O-(1-methyl-2-carbmethoxy-vinyl)-phosphat, 0,0-Dimethyl-S-(N-methyl-carbamoyl-methyl)-phosphordithioat, 0,0-Dimethyl-S-(N-methyl-carbamoyl-methyl)-phosphorthioat, 0,0-Dimethyl-S-(N-methoxyethyl-carbamoyl-methyl)-phosphordithioat, 0,0-Dimethyl-S-(N-formyl-N-methyl-carbamoylmethyl-phosphordithioat, 0,0-Dimethyl-O-[1-methyl-2-(methyl-carbamoyl)-vinyl]-phosphat, 0,0-Dimethyl-O-[(1-methyl-2-dimethylcarbamoyl)-vinyl]-phosphat, 0,0-Dimethyl-O-[(1-methyl-2-chlor-2-diethylcarbamoyl)-vinyl]-phosphat, 0,0-Diethyl-S-(ethylthio-methyl)-phosphordithioat, 0,0-Diethyl-S-[(p-chlor-

phenylthio)-methyl]-phosphordithioat, O,O-Dimethyl-S-(2--ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthio--ethyl)-phosphordithioat, O,O-Diethyl-S-(2-ethylsulfinyl--ethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S--[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O[2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl--N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,-trans-chrysanthemat, 5-Benzyl-furyl-(3)-methyl-DL-cis,-trans-chrysanthemat, 3-Phenoxybenzyl(±)-cis,trans-2,2-dimethyl-3-(2,2-dichlorvinyl)-cyclopropancarboxylat, α-Cyano-3-phenoxybenzyl(±)-cis,trans-2,2-dimethyl-3-(2,2--dichlorvinyl)-cyclopropancarboxylat, (s)-α-Cyano-3-phenoxybenzyl-cis(1R,3R)-2,2-dimethyl-3-(2,2-dibromvinyl)--cyclopropancarboxylat, 3,4,5,6-Tetrahydrophthalimidoethyl-DL-cis,trans-chrysanthemat, 2-Methyl-5-(2-propinyl)--3-furylmethyl-chrysanthemat, (α-Cyano-3-phenoxybenzyl)--α-isopropyl-4-chlorphenylacetat.

Die folgenden Anwendungsbeispiele lassen die beachtliche Wirksamkeit der neuen Verbindungen erkennen.

Als Vergleichsmittel dienen O,O-Diethyl-S-benzyl-thiophosphat (A; Chem. Abstr. 73, 76037v (1970)), O-Ethyl-S,S-di-n-propyl-phosphordithioat (B; US-PS 3 268 393) und O,O-Diethyl-S-propargyl-phosphordithioat (C; DE-AS 10 63 148).

Anwendungsbeispiel 1

Wirksamkeit gegen Piricularia oryzae an Reis

Blätter von in Töpfen gewachsenen Reiskeimlingen werden mit einer wäßrigen Konidienaufschwemmung des Pilzes Piricularia oryzae künstlich infiziert. Nach der Infektion werden die Pflanzen 24 Stunden lang in einer Kammer bei Temperaturen von 22 bis 25°C und hoher Luftfeuchtigkeit (Wasserdampfsättigung) aufgestellt und nach Ablauf dieser Zeit mit 0,1 %iger (Gew.%) wäßrigen Emulsion, die 80 % Wirkstoff und 20 % Dispergiermittel in der Trockensubstanz enthält, tropfnaß gespritzt. Die Töpfe mit den Pflanzen werden dann in die feuchte Kammer zurückgestellt. Nach 5 Tagen haben sich auf den unbehandelten Kontrollpflanzen die Krankheitssymptome so stark ausgebildet, daß die entstandenen Blattflecken den überwiegenden Teil der Gesamtfläche bedecken. Die Bewertung des Pilzbefalls erfolgt nach dem Schema:

0 = Blätter befallsfrei, abgestuft bis 5 = Blätter stark befallen.

| Wirkstoff (aus Beispiel Nr.) | Befall der Blätter nach Spritzung mit 0,1 %iger Wirkstoffbrühe |
|---|---|
| 6 | 0 |
| 7 | 0 |
| Vergleichsmittel A | 2 |
| Kontrolle (unbehandelt) | 5 |

Anwendungsbeispiel 2

Kontaktwirkung auf Baumwollwanze (Dysdercus intermedius)

Petrischalen von 10 cm Durchmesser werden mit 1 ml der acetonischen Wirkstofflösung ausgekleidet. Nach Verdunsten des Lösungsmittels besetzt man die Schalen mit je 20 Larven des vorletzten Stadiums und registriert die Wirkung nach 24 Stunden.

Ergebnis

| Wirkstoff (aus Beispiel Nr.) | | |
|---|---|---|
| 2 | 0,01 mg | 100 % Mort. |
| 7 | 0,01 mg | 80 % Mort. |
| Vergleichsmittel B | 0,02 mg | 100 % Mort. |
| | 0,01 mg | $<$ 80 % Mort. |
| Vergleichsmittel C | 0,2 mg | 100 % Mort. |

Anwendungsbeispiel 3

Fraß- und Kontaktwirkung auf Raupen der Kohlschabe (Plutella maculipennis)

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.
Nach 48 Stunden beurteilt man die Wirkung.

Ergebnis

| Wirkstoff (aus Beispiel Nr.) | | |
| --- | --- | --- |
| 5 | 0,01 % | 100 % Mort. |
| 6 | 0,004 % | 80 % Mort. |
| Vergleichsmittel C | 0,02 % | 80 % Mort. |

Anwendungsbeispiel 4

Kontaktwirkung auf Blattläuse (Aphis fabae); Spritzversuch

Getopfte Bohnenpflanzen (Vivia faba) mit starken Blattlauskolonien werden in der Spritzkammer mit den wäßrigen Wirkstoffaufbereitungen tropfnaß gespritzt.
Die Auswertung erfolgt nach 24 Stunden.

Ergebnis

| Wirkstoff (aus Beispiel Nr.) | | |
|---|---|---|
| 1 | 0,004 % | 100 % Mort. |
| 4 | 0,002 % | ca. 80 % Mort. |
| Vergleichsmittel B | 0,01 % | 100 % Mort. |
| Vergleichsmittel C | 0,1 % | ca. 80 % Mort. |

Anwendungsbeispiel 5

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ungefähr 22 Sekunden. Nach 8 Tagen werden die Pflanzen auf lebende Spinnmilben untersucht.

Ergebnis

| Wirkstoff (aus Beispiel Nr.) | | |
|---|---|---|
| 2 | 0,05 % | 100 % Mort. |
| 6 | 0,05 % | ca. 80 % Mort. |
| Vergleichsmittel B | 0,1 % | < 80 % Mort. |
| Vergleichsmittel C | 0,1 % | < 80 % Mort. |

Anwendungsbeispiel 6

Kontaktwirkung auf Zecken (Ornithodoris moubata)

Geprüft wird mit Zecken im 3. Larvenstadium. Dazu taucht man die Tiere, die sich in einem Teeaufguß-Beutel befinden, für 3 Sekunden in die Prüfemulsion. Die Beutel werden frei aufgehängt. Nach 48 Stunden wird die Wirkung auf die Zecken beurteilt.

Ergebnis

| Wirkstoff (aus Beispiel Nr.) | | |
|---|---|---|
| 1 | 0,005 % | 80 % Mort. |
| 2 | 0,001 % | 100 % Mort. |
| 5 | 0,01 % | 80 % Mort. |
| 6 | 0,001 % | 80 % Mort. |
| 7 | 0,005 % | 100 % Mort. |
| Vergleichsmittel C | 0,04 % | 100 % Mort. |

Patentansprüche

1. 2-Thiocyanoethyl-phosphorsäurederivate der Formel I

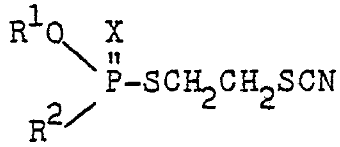 (I),

in der $R^1$ eine unverzweigte oder verzweigte Alkylgruppe mit bis zu 5 Kohlenstoffatomen, $R^2$ einen unverzweigten oder verzweigten Alkoxy-, Alkylthio- oder Alkenylthiorest mit jeweils bis zu 5 Kohlenstoffatomen, den Benzylthiorest oder eine unverzweigte oder verzweigte Alkylamino- oder Dialkylaminogruppe mit jeweils bis zu 4 Kohlenstoffatomen in einer Alkylgruppe und X Sauerstoff oder Schwefel bedeuten.

2. 2-Thiocyanoethyl-phosphorsäurederivate der Formel I gemäß Anspruch 1, dadurch gekennzeichnet, daß $R^1$ Ethyl, $R^2$ einen Alkylthiorest mit 1 bis 4 Kohlenstoffatomen und X Sauerstoff bedeuten.

3. Verfahren zur Herstellung von 2-Thiocyanoethylphosphorsäurederivaten der Formel I gemäß Anspruch 1, dadurch gekennzeichnet, daß man 2-Thiocyanoethylhalogenide der Formel II

$$Hal\ CH_2CH_2SCN \quad (II),$$

in der Hal für ein Halogenatom steht, mit Salzen von Phosphorsäurederivaten der Formel III

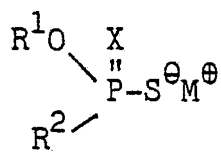

(III),

in der $R^1$, $R^2$ und X die oben genannten Bedeutungen haben und $M^{\oplus}$ ein Alkalimetallion, ein Äquivalent Erdalkalimetallion oder ein gegebenenfalls durch Alkylreste substituiertes Ammoniumion bedeuten, gegebenenfalls in Anwesenheit eines Lösungs- oder Verdünnungsmittels bei Temperaturen zwischen 0 und 120°C umsetzt.

4. Schädlingsbekämpfungsmittel, enthaltend einen festen oder flüssigen Trägerstoff und mindestens ein 2-Thiocyanoethyl-phosphorsäurederivat der Formel I gemäß Anspruch 1.

5. Fungizides Mittel, enthaltend einen festen oder flüssigen Trägerstoff und mindestens ein 2-Thiocyanoethyl-phosphorsäurederivat der Formel I gemäß Anspruch 1.

6. Verfahren zur Bekämpfung von Schädlingen, dadurch gekennzeichnet, daß man eine wirksame Menge eines 2-Thiocyanoethyl-phosphorsäurederivates der Formel I gemäß Anspruch 1 auf Schädlinge und/oder deren Lebensraum einwirken läßt.

7. Verfahren zur Bekämpfung von phytophatogenen Pilzen, dadurch gekennzeichnet, daß man eine fungizid wirksame Menge eines 2-Thiocyanoethyl-phosphorsäurederivates der Formel I gemäß Anspruch 1 auf die Pilze, auf durch Pilzbefall bedrohte Flächen, Pflanzen oder das Saatgut einwirken läßt.

0043926

Europäisches Patentamt

# EUROPÄISCHER RECHERCHENBERICHT

Nummer der Anmeldung
EP 81 10 4598

| Kategorie | EINSCHLÄGIGE DOKUMENTE — Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | SOVIET INVENTIONS ILLUSTRATED, Section Chemical, Derwent Publications Ltd., Week X50, 26th January 1977, Section C, pages 1,2<br>& SU - A - 384 343 (ZEMLYANSKII N I)<br>* Zusammenfassung * | 1,4 | C 07 F 9/165<br>9/24<br>9/173<br>A 01 N 57/10<br>57/26 |
| | -- | | |
| | DERWENT JAPANESE PATENTS, Section Chemical, Derwent Publications Ltd., Week 31.8.67-6.9.67, vol. 6, no. 35, section 5, page 3<br>& JP - A - 16 197/67 (IHARA NOYAKU K.K.)<br>* Zusammenfassung * | 1,4 | RECHERCHIERTE SACHGEBIETE (Int. Cl.³)<br>C 07 F 9/165<br>9/24<br>9/173 |
| | -- | | |
| | US - A - 3 275 501 (G. SCHRADER)<br>* Insgesamt; Spalte 5, Verbindung VI * | 1,4 | |
| | -- | | |
| | US - A - 3 030 265 (I.W. BAKER)<br>* Insgesamt, Spalte 2, Beispiel 1 * | 1,4 | |
| | -- | | |
| DA | US - A - 3 268 393 (J.H. WILSON)<br>* Insgesamt * | 1,4 | |
| | ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-10-1981 | BESLIER |